# EUROPÄISCHE PATENTSCHRIFT

(11) **EP 1 463 736 B1**
(45) Veröffentlichungstag und Bekanntmachung des Hinweises auf die Patenterteilung: **11.05.2005**
(21) Anmeldenummer: 02791802.8
(22) Anmeldetag: 10.12.2002
(51) Int. Cl.: C07F 1/02

(54) **VERFAHREN ZUR HERSTELLUNG VON ALKYLLITHIUMVERBINDUNGEN UNTER VERMINDERTEM DRUCK**
METHOD FOR THE PRODUCTION OF ALKYLLITHIUM COMPOUNDS BY USING REDUCED PRESSURE
PROCEDE DE PRODUCTION DE COMPOSES D'ALKYLLITHIUM SOUS PRESSION REDUITE

(30) Priorität: 18.12.2001 DE 10162332
(43) Veröffentlichungstag der Anmeldung: 06.10.2004
(73) Patentinhaber: Chemetall GmbH, 60487 Frankfurt (DE)
(72) Erfinder: WEISS, Wilfried, 37632 Eschershausen (DE); DOLLING, Eike, 38642 Goslar (DE); SCHNEIDER, Bernd, 38667 Bad Harzburg (DE)
(74) Vertreter: Uppena, Franz, Dr.
(86) Internationale Anmeldenummer: PCT/EP2002/013975
(87) Internationale Veröffentlichungsnummer: WO 2003/051891

(56) Entgegenhaltungen:
- WO-A-95/01982
- WO-A-96/40692
- US-A- 3 122 592
- US-A- 3 452 112
- US-A- 5 211 887

## Beschreibung

Die Erfindung betrifft ein Verfahren zur Herstellung von Alkyllithiumverbindungen unter vermindertem Druck.

Alkyllithiumverbindungen werden hergestellt durch Umsetzung organischer Halogenverbindungen mit metallischem Lithium. Gewöhnlich wird die Reaktion in Kohlenwasserstoffen oder in Ethem als Lösungsmittel durchgeführt.

Die WO 95/01982 beschreibt detailliert die Herstellung von Alkyllithiumverbindungen aus Lithiummetalldispersion und Alkylhalogenid, wobei auf den Natriumgehalt des Lithiums, auf den Lithiumüberschuss relativ zum Alkylhalogenid, auf das Alkylhalogenid, auf die Dosierrate, auf das Lösungsmittel, auf den Einfluss von Wasserspuren in der Reaktion und auf die Reaktionstemperatur eingegangen wird. Die Reaktion zwischen Lithium und Alkylhalogenid wird je nach verwendetem Lösungsmittel am Siedepunkt des Lösungsmittels zwischen 50 und 100 °C, oder zwischen 50 und 125 °C unterhalb des Siedepunktes des Lösungsmittels durchgeführt.

Die WO 96/40692 beschreibt ein Verfahren zur Herstellung von Lithiumorganischen Lösungen, bei dem gegossene oder extrudierte Lithiumstäbe mit einem Alkylhalogenid (z.B. n-, s- oder t-Butylchlorid) im molaren Überschuss von 3 : 1 bis 20 : 1 in einem Lösungsmittel unter Schutzgasatmosphäre während 1 bis 10 Stunden unter moderatem Rühren reagieren und das Produkt von Lithiummetall und dem Nebenprodukt LiCl im Reaktor abgetrennt wird. Bei einer ebenfalls in der WO 96/40692 beschriebenen Verfahrensvariante wird bei der Reaktion nicht gerührt (das gebildete LiCl verbleibt auf dem Li-Metall), die Produktlösung wird abgetrennt, und das überschüssige Li-Metall reagiert nach Abtrennen des LiCl (z. B. durch Zugabe von Lösungsmittel, Aufrühren und Abtrennen der LiCl-Suspension) zusammen mit neu zugegebenem Metall im ergänzten Lösungsmittel erneut mit zugegebenem Alkylhalogenid.

Bei der Umsetzung von Lithium mit einem Alkylhalogenid handelt es sich um eine sehr exotherme Reaktion. In der Regel legt man das Lithium im Lösungsmittel vor und dosiert das Alkylhalogenid in dem Maße zu, wie die Reaktionswärme abgeführt werden kann. Bei der Herstellung von n-Butyllithium in Hexan z.B. steigt die Temperatur schnell von Raumtemperatur (20 °C) bis zum Siedepunkt des Hexans (68 °C). Die freiwerdende Reaktionswärme kann über den Reaktormantel oder über die Siedekühlung des Lösungsmittels (unter Ausnutzung der Verdampfungsenthalpie des Lösungsmittels) abgeführt werden.

Um eine möglichst schnelle und vollständige Umsetzung zu erreichen, kann für die Umsetzung von Li-Metall mit Alkylhalogeniden, insbesondere Alkylchloriden, prinzipiell eine erhöhte Temperatur gewählt werden, z.B. die Siedetemperatur gängiger Lösungsmittel wie Hexan (68 °C) oder Heptan (98 °C). Dies ist jedoch leider nicht immer praktikabel, da sich eine erhöhte Temperatur negativ auf die Ausbeute auswirkt. So kommt es bei erhöhten Temperaturen verstärkt zu unerwünschten Wurtz-Reaktionen, thermischen Zersetzungen der Alkyllithiumverbindungen und anderen Nebenreaktionen. Bei den Butyllithiumverbindungen weist das s-Butyllithium eine größere thermische Empfindlichkeit auf als das n-Butyllithium. Eine besonders große thermische Empfindlichkeit hat das iso-Butyllithium. Bei n-Alkyllithiumverbindungen treten die oben beschriebenen unerwünschten Reaktionen insbesondere bei der Synthese in höher als Hexan siedenden Lösungsmitteln wie Heptan (ein bevorzugtes Lösungsmittel für Alkyllithiumverbindungen) oder Octan auf. Bei den verzweigten s- und t-Alkylithiumverbindungen ist dies bereits bei niedrigeren Temperaturen als dem Siedepunkt des Hexans (68 °C) zu beobachten. Aus diesem Grunde wird z.B. t-Butyllithium allgemein in siedendem Pentan bei einer Temperatur von nur 33 °C hergestellt. Wird die Synthese der Alkyllithiumverbindungen dagegen unterhalb des Lösungsmittelsiedepunktes durchgeführt, so ist zwar aufgrund der niedrigeren Temperatur der Umfang der unerwünschten Nebenreaktionen geringer, es stellt sich allerdings häufig eine Reaktionsverzögerung ein, und es kann dadurch leicht zur Akkumulation des Alkylhalogenids kommen, was wiederum die Reaktion außer Kontrolle geraten lassen kann.

Aufgabe der Erfindung ist es, die Nachteile des Standes der Technik zu überwinden und ein Verfahren zur Herstellung von Alkyllithiumverbindungen zu schaffen, das bei hohen Ausbeuten eine möglichst hohe Reaktionsgeschwindigkeit erlaubt, ohne dass unerwünschte Nebenreaktionen auftreten.

Die Aufgabe wird durch ein Verfahren gelöst, bei dem metallisches Lithium mit einem Alkylhalogenid in einem Lösungsmittel umgesetzt wird, wobei die Umsetzung bei vermindertem Druck und am Siedepunkt des Lösungsmittels durchgeführt wird. "Verminderter Druck" ist dabei so zu verstehen, dass der Druck im Reaktionsgefäß unterhalb des Umgebungsdruckes (Atmosphärendruck) liegt.

Obwohl die Reaktionstemperaturen bei dieser Reaktionsweise unter den jeweiligen Siedetemperaturen der verwendeten Lösungsmitteln bei Normaldruck liegen, z.B. liegen die besonders bevorzugten Reaktionstemperaturen bei 20 bis 50 °C, ist die Ausbeute bei der Durchführung des Verfahrens bei vermindertem Druck deutlich höher als bei einer vergleichbaren Umsetzung, die bei gleicher Temperatur, aber bei Normaldruck durchgeführt wird. Dies mag seinen Grund darin haben, dass das siedende Lösungsmittel Dampfblasen an der Lithiumoberfläche bildet, die das Ablösen des entstehenden LiCl von der Li-Metalloberfläche erleichtern.

Die Umsetzung wird je nach gewähltem Lösungsmittel bevorzugt bei einem Druck von 10 bis 900 mbar, besonders bevorzugt 50 bis 500 mbar, durchgeführt. Bevorzugte Temperaturen sind 0 bis 80 °C, besonders bevorzugte Temperaturen 20 bis 50 °C.

Von Vorteil des erfindungsgemäßen Verfahrens ist es, dass bei der Umsetzung von Lithium mit einem Alkylhalogenid in einem Lösungsmittel eine hohe und gleichmäßige Reaktionsgeschwindigkeit erreicht wird und gleichzeitig aufgrund der relativ niedrigen Temperatur Nebenreaktionen wirksam unterdrückt werden. Dies gilt insbesondere für thermisch labilere Alkyllithiumverbindungen, z.B. sec- und tert-Butyllithium oder besonders auch iso-Butyllithium. Auch kann die Reaktion mit Hilfe des erfindungsgemäßen Verfahrens in höher siedenden Lösungsmitteln (z.B. Cyclopentan, Cyclohexan, Methylcyclohexan, Heptan, Octan, Nonan, Decan, Toluol, Ethylbenzol oder Mesitylen) durchgeführt werden. So können Lösungen von Alkyllithiumverbindungen in höher siedenden Lösungsmitteln bereitgestellt werden, ohne dass ein Lösungsmitteltausch durchgeführt werden muss, wie dies bisher der Fall war. Weiterhin von Vorteil ist, dass auf bisher oftmals eingesetzte Ether als Lösungsmittel oder Lösungsmittelkomponente (Ether dienen dem Lösen von Li-Halogenid von der Li-Oberfläche) verzichtet werden kann. Ein weiterer Vorteil des erfindungsgemäßen Verfahrens ist, dass die Synthese von Butyllithium in aromatischen Kohlenwasserstoffen, wie z.B. Toluol, möglich ist, ohne dass es zu einer Metallierung des Aromaten kommt.

Weil die Reaktion erfindungsgemäß am Siedepunkt des jeweiligen Lösungsmittels durchgeführt wird, kann die auftretende Reaktionswärme vorteilhaft über die Verdampfungsenthalpie des Lösungsmittels abgeführt werden, was einen Vorteil gegenüber der sonst bei Reaktionen unterhalb des Lösungsmittelsiedepunktes durchgeführten Mantelkühlung bedeutet.

Die Erfindung wird im folgenden anhand von Beispielen näher erläutert.

### Beispiel 1: Herstellung von s-Butyllithium in Cyclohexan bei 40 °C unter Vakuum

24,5 g Li-Pulver (3,60 mol) wurden mit 0,5 g LiH-Pulver in 100 ml Cyclohexan 30 Minuten bei Raumtemperatur gerührt und die Reaktion durch Zugabe von 2 ml s-Butylchlorid gestartet.

Weitere 570 ml Cyclohexan (insgesamt 500 g = 670 ml) wurden zugefügt und nochmals mit 5 ml s-Butylchlorid gestartet. Nach einem Temperaturanstieg (Anspringen der Reaktion) wurde die Innentemperatur auf 40 °C eingeregelt und der Druck soweit erniedrigt, dass das Lösungsmittel zum Sieden kam (250 mbar). Nun wurden das restliche s-Butylchlorid (Gesamtmenge 138 g, 1,49 mol) innerhalb von 80 Minuten zudosiert und 60 Minuten nachreagiert. Anschließend wurde das Vakuum mittels Argon gebrochen, das auf Raumtemperatur erkaltete Reaktionsgemisch filtriert und mit Cyclohexan gewaschen.

Erhalten wurden 663 g einer klaren, fast farblosen Lösung mit 2,24 mmol s-Butyllithium pro g Lösung.

Gesamtmenge s-Butyllithium = 1,49 mol (> 99 % Ausbeute).

### Vergleichsbeispiel A: Herstellung von s-Butyllithium in Cyclohexan bei 81 °C unter Normaldruck

Analog Beispiel 1 wurden 10,0 g Li-Pulver (1,44 mol) in 253 g Cyclohexan mit 40 g s-Butylchlorid innerhalb von 1 Stunde umgesetzt, wobei im Unterschied zu Beispiel 1 unter Normaldruck gearbeitet wurde und das Lösungsmittel bei 81 °C siedete. Anschließend wurde 30 Minuten nachreagiert. Die erhaltene Reaktionslösung hatte einen Gesamtbasegehalt von 1,31 mmol pro g Lösung, was einer Ausbeute von maximal 84,7 % entspricht.

Aus dem Vergleich der Ergebnisse von Beispiel 1 und Vergleichsbeispiel A ist ersichtlich, dass die Ausbeute bei Durchführung des erfindungsgemäßen Verfahrens (Reaktion bei niedrigerer Temperatur, aber durch das Vakuum am Siedepunkt) signifikant höher ist als bei der Durchführung des bekannten Verfahrens (Reaktion bei höherer Temperatur am Siedepunkt unter Normaldruck).

### Beispiel 2: Herstellung von t-Butyllithium in Hexan bei verschiedenen Temperaturen unter Vakuum

21,0 g Li-Pulver (3,02 mol) wurden mit 0,1 g LiH-Pulver in 100 ml Hexan 30 Minuten bei Raumtemperatur gerührt und die Reaktion durch Zugabe von 2 ml t-Butylchlorid gestartet.

Weitere 700 ml Hexan (insgesamt 535 g = 800 ml) wurden zugefügt und nochmals mit 5 ml t-Butylchlorid gestartet. Nach einem Temperaturanstieg (Anspringen der Reaktion) wurde die Innentemperatur auf 50 °C eingeregelt und der Druck soweit erniedrigt, dass das Lösemittel zum Sieden kam (500 mbar). Nun wurden das restliche t-Butylchlorid (Gesamtmenge 92,6 g, 1 mol) innerhalb von 4 Stunden zudosiert und 1 Stunde nachreagiert. Anschließend wurde das Vakuum mittels Argon gebrochen, das auf Raumtemperatur erkaltete Reaktionsgemisch filtriert und mit Hexan gewaschen.

Erhalten wurden 693 g einer klaren Lösung mit einem Gehalt von 0,96 mmol t-Butyllithium pro g Lösung, was einer Ausbeute von 66,5 % entspricht.

Die Reaktion wurde in analoger Weise bei ca. 40 °C und 400 mbar durchgeführt. Erhalten wurden 691 g einer klaren Lösung mit einem Gehalt von 1,12 mmol t-Butyllithium pro g Lösung, was einer Ausbeute von 77,4 % entspricht.

Die Reaktion wurde nochmals in analoger Weise bei ca. 30 °C und 300 mbar durchgeführt. Erhalten wurden 626 g einer klaren Lösung mit einem Gehalt von 1,53 mmol t-Butyllithium pro g Lösung, was einer Ausbeute von 95,8 % entspricht.

Diese 3 Beispiele zeigen die direkte Synthese von t-Butyllithium in Hexan. Der bisher übliche Umweg über die Synthese in Pentan mit anschließendem umständlichem Lösungsmitteltausch kann durch das erfindungsgemäße Verfahren jetzt vermieden werden. Deutlich zu erkennen ist auch die Ausbeutesteigerung bei niedrigeren Temperaturen.

### Beispiel 3: Herstellung von n-Butyllithium in Methylcyclohexan bei 50 °C unter Vakuum

22,3 g Li-Pulver (3,2 mol) wurden mit 0,3 g LiH-Pulver in 100 ml Methylcyclohexan 30 min bei Raumtemperatur gerührt und die Reaktion durch Zugabe von 2 ml n-Butylchlorid gestartet.

Weitere 560 ml Methylcyclohexan (insgesamt 500 g = 660 ml) wurden zugefügt und nochmals mit 2 ml n-Butylchlorid gestartet. Nach einem Temperaturanstieg wurde die Innentemperatur auf 50 °C eingeregelt und der Druck soweit erniedrigt, dass das Lösemittel zum Sieden kam (190 mbar). Nun wurden 148,5 g (1,6 mol) n-Butylchlorid innerhalb von 120 Minuten zudosiert und 30 Minuten nachreagiert. Anschließend wurde das Vakuum mittels Argon gebrochen, das auf Raumtemperatur erkaltete Reaktionsgemisch filtriert und mit Methylcyclohexan gewaschen.

Erhalten wurden 558 g klare, farblose Produktlösung mit einem Gehalt von 2,46 mmol/g n-Butyllithium und 127 g Waschfiltrat mit einem Gehalt von 0,76 mmol/g n-Butyllithium. Die isolierte Ausbeute betrug 1,5 mol (91,8 %).

### Beispiel 4: Herstellung von n-Butyllithium in Toluol bei 50 °C unter Vakuum

22,3 g Li-Pulver (3,2 mol) wurden mit 0,3 g LiH-Pulver in 100 ml Toluol 30 Minuten bei Raumtemperatur gerührt und die Reaktion durch Zugabe von 2 ml n-Butylchlorid gestartet.

Weitere 485 ml Toluol (insgesamt 500 g = 585 ml) wurden zugefügt und nochmals mit 2 ml n-Butylchlorid gestartet. Nach einem Temperaturanstieg wurde die Innentemperatur auf 50 °C eingeregelt und der Druck soweit erniedrigt, dass das Lösungsmittel zum Sieden kam (140 mbar). Nun wurden 148,5 g (1,6 mol) n-Butylchlorid innerhalb von 120 Minuten zudosiert und 30 Minuten nachreagiert. Anschließend wurde das Vakuum mittels Argon gebrochen und das auf Raumtemperatur erkaltete Reaktionsgemisch filtriert und mit Toluol gewaschen.

Erhalten wurden 532 g einer klaren, farblosen Produktlösung mit einem Gehalt von 2,45 mmol/g n-Butyllithium und 133 g Waschfiltrat mit einem Gehalt von 1,06 mmol/g n-Butyllithium, was einer Ausbeute von 1,45 mol = 90,3 % entspricht.

## Patentansprüche

1. Verfahren zur Herstellung von Alkyllithiumverbindungen, bei dem metallisches Lithium mit einem Alkylhalogenid in einem Lösungsmittel umgesetzt wird, **dadurch gekennzeichnet, dass** die Umsetzung bei vermindertem Druck und am Siedepunkt des Lösungsmittels durchgeführt wird.

2. Verfahren nach Anspruch 1, **dadurch gekennzeichnet, dass** die Umsetzung je nach Lösungsmittel bei einem Druck von 10 bis 900 mbar durchgeführt wird.

3. Verfahren nach Anspruch 2, **dadurch gekennzeichnet, dass** die Umsetzung je nach Lösungsmittel bei einem Druck von 50 bis 500 mbar durchgeführt wird.

4. Verfahren nach einem der Ansprüche 1 bis 3, **dadurch gekennzeichnet, dass** die Umsetzung je nach Lösungsmittel bei einer Temperatur von 0 bis 80 °C durchgeführt wird.

5. Verfahren nach Anspruch 4, **dadurch gekennzeichnet, dass** die Umsetzung je nach Lösungsmittel bei einer Temperatur von 20 bis 50 °C durchgeführt wird.

6. Verfahren nach einem der Ansprüche 1 bis 5, **dadurch gekennzeichnet, dass** als Lösungsmittel ein aliphatischer oder aromatischer Kohlenwasserstoff eingesetzt wird.

## Claims

1. Process for the production of alkyl lithium compounds in which metallic lithium is reacted with an alkyl halide in a solvent, **characterised in that** the reaction is performed under reduced pressure and at the boiling point of the solvent.

2. Process according to claim 1, **characterised in that** depending on the solvent, the reaction is performed under a pressure of 10 to 900 mbar.

3. Process according to claim 2, **characterised in that** depending on the solvent, the reaction is performed under a pressure of 50 to 500 mbar.

4. Process according to claims 1 to 3, **characterised in that** depending on the solvent, the reaction is performed at a temperature of 0 to 80°C.

5. Process according to claim 4, **characterised in that** depending on the solvent, the reaction is performed at a temperature of 20 to 50°C.

6. Process according to one of claims 1 to 5, **characterised in that** an aliphatic or aromatic hydrocarbon is used as solvent.

## Revendications

1. Procédé de préparation de composés de type alkyl-lithium, dans lequel on fait réagir du lithium métallique sur un halogénure d'alkyle dans un solvant, **caractérisé en ce que** cette réaction se déroule sous pression réduite et au point d'ébullition du solvant.

2. Procédé conforme à la revendication 1, **caractérisé en ce que** la réaction s'effectue, selon le solvant, sous une pression de 10 à 900 mbar.

3. Procédé conforme à la revendication 2, **caractérisé en ce que** la réaction s'effectue, selon le solvant, sous une pression de 50 à 500 mbar.

4. Procédé conforme à l'une des revendications 1 à 3, **caractérisé en ce que** la réaction s'effectue, selon le solvant, à une température de 0 à 80 °C.

5. Procédé conforme à la revendication 4, **caractérisé en ce que** la réaction s'effectue, selon le solvant, à une température de 20 à 50 °C.

6. Procédé conforme à l'une des revendications 1 à 5, **caractérisé en ce que** l'on emploie comme solvant un hydrocarbure aliphatique ou aromatique.
